# EUROPÄISCHE PATENTSCHRIFT

(11) **EP 2 310 711 B1**
(45) Veröffentlichungstag und Bekanntmachung des Hinweises auf die Patenterteilung: **13.06.2012**
(21) Anmeldenummer: 09777335.2
(22) Anmeldetag: 21.07.2009
(51) Int. Cl.: F16D 55/22, F16D 55/227

(54) **FAHRZEUGSCHEIBENBREMSE**
VEHICLE DISK BRAKE
FREIN À DISQUE DE VÉHICULE

(30) Priorität: 23.07.2008 DE 102008034300
(43) Veröffentlichungstag der Anmeldung: 20.04.2011
(73) Patentinhaber: Lucas Automotive GmbH, 56070 Koblenz (DE)
(72) Erfinder: LAUBENTHAL, Frank, 56814 Wirfus (DE); HEES, Dirk, 56727 Mayen (DE); ZENZEN, Guido, 56290 Macken (DE)
(74) Vertreter: Schmidt, Steffen
(86) Internationale Anmeldenummer: PCT/EP2009/005286
(87) Internationale Veröffentlichungsnummer: WO 2010/009864

(56) Entgegenhaltungen:
- EP-A- 0 729 871
- EP-B- 0 996 560
- WO-A-2007/039922
- US-A- 4 355 707
- US-A1- 2004 016 609
- US-A1- 2005 217 951

## Beschreibung

Eine Fahrzeugscheibenbremse hat einen am Fahrwerk eines Fahrzeuges zu befestigenden Bremsträger und einen vom Bremsträger gehaltenen Sattel oder Rahmen mit darin aufgenommenen Reibbelägen, die gegen eine rotierende Bremsscheibe gepresst werden.

Bremsen dieser Art sind allgemein bekannt. Üblicherweise werden die Reibbeläge, bestehend aus Tragplatte und Reibschicht, mittels am Bremsträger befestigter Bolzen axial in Bezug auf die Bremsscheibe geführt. "Axial" bei Scheibenbremsen bedeutet im Allgemeinen: in einer Richtung parallel zur Rotationsachse der Bremsscheibe. "Radial" bedeutet entsprechend eine Richtung senkrecht zu einer axialen Richtung im vorstehenden Sinne. Der Bremsträger ist seinerseits am Radlager befestigt.

### Stand der Technik

Den Stand der Technik derartiger als Scheibenbremsen ausgestalteter Fahrzeugbremsen repräsentieren z.B. die folgenden Dokumente: DE 1 238 284, DE 1 505 491, DE 1 575 920, DE 2 804 808, DE 2 845 404, DE 41 15 064 und DE 4 416 815, DE 101 13 347 A1, DE 41 15 064 A1 und DE 2211013 A, EP 0 729 871 A1.

Bei derartigen Fahrzeugscheibenbremsen wird der Reibbelag mittels eines Bremskolbens durch Hydraulikdruck gegen eine Bremsscheibe gepresst, um deren Drehung abzubremsen. Hierzu wird Hydraulikfluid unter Druck in eine Hydraulikkammer eingeleitet, deren eine Begrenzungswand durch den Bremskolben gebildet ist. Der Druck in der Hydraulikkammer führt dann zur Verschiebung des Bremskolbens und damit des Reibbelags in Richtung auf die Bremsscheibe.

Damit eine derartige Fahrzeugscheibenbremse nicht nur als Betriebsbremse, sondern darüber hinaus als Feststellbremse - auch Parkbremse genannt - verwendet werden kann, ist sie mit einem zusätzlichen Aktuator ausgestattet, der im Fahrzeugstillstand die Reibbeläge mit der Bremsscheibe in Eingriff bringt und hält. Dabei werden vermehrt elektrische Parkbremsen eingesetzt, die mit sog. Smart-Aktuatoren betrieben sein können. Unter einem Smart-Aktuator ist hier in der Regel eine Baueinheit verstanden, die einen Elektromotor, ggf. mit einem die Drehzahl untersetzenden (und damit das Drehmoment heraufsetzenden) Getriebe sowie zugehöriger Steuer- und Leistungselektronik aufweist. Diese Baueinheit wird meist durch einen LIN-, CAN-, oder MOST-Bus, oder auf andere Weise mit (Feststell-, Löse-, Halte-, etc.) Steuersignalen versorgt. Allerdings kann diese Baueinheit, durch die zusätzlichen Elektronikkomponenten bedingt, größer bauen als ein herkömmlicher Aktuator mit einem Elektromotor, dessen Ansteuerelektronik räumlich von ihm abgesetzt angeordnet ist.

EP 0 729 871 A1 beschreibt eine elektrisch betätigbare Kraftfahrzeugfeststellbremse mit Notbetätigung, welche mittels einer Getriebeanordnung zuspannbar und lösbar ist. Die Notbetätigung kann bei herkömmlichen Scheiben- und Trommelbremsen verwendet werden, um über eine Handkurbel bei einem Ausfall oder bei Versagen der elektrischen Feststellbremse, diese zu lösen oder anzuziehen.

US 2004/0016609 A1 offenbart eine Schreibenbremse, welche U-förmige Bremsträger aufweist, die einem Verbiegen des Bremssattels entgegenwirken und einen kontrollierten Abrieb des Bremsbelags ermöglichen.

### Problem

Die Fahrzeugscheibenbremse ist zu optimalen Raumausnutzung möglichst genau in die innere Radkontur einzupassen. Der zur Verfügung stehende Raum wird dabei durch die zusätzliche Parkbremseinheit eingeschränkt. Dazu kommt, dass die an den Bremssattel angebaute Parkbremseinheit den Zugang zu den Führungsbolzen für die Bremsbeläge und/oder die Befestigungsbolzen der Fahrzeugscheibenbremse am Fahrwerk einschränkt. Die De/Montage wird hierdurch erschwert. Diese Umstände treten bei Fahrzeugen der Kompaktklasse mit ihren kleineren Raddurchmessern (z.B. 14 Zoll - 17 Zoll) besonders deutlich auf. Damit kann in dieser Fahrzeugklasse bisher die elektrische Parkbremse kaum eingesetzt und der damit verbundene Komfortgewinn, z.B. beim Anfahren am Berg, nicht zur Verfügung gestellt werden.

Diese Probleme zu verringern oder zu lösen ist das Ziel der hier vorgestellten Fahrzeugbremsen.

### Lösung

Zur Lösung der Probleme werden Fahrzeugscheibenbremsen mit den Merkmalen der unabhängigen Patentansprüche vorgeschlagen.

### Details

Die Fahrzeugscheibenbremse weist einen Bremsträger auf, der am Fahrwerk eines Kraftfahrzeuges durch wenigstens einen Schraubenbolzen zu befestigen ist. In dem Bremsträger sind zwei Führungsbolzen aufgenommen, um einen Bremssattel relativ zu dem Bremsträger verschiebbar zu führen.

Ein Bremsträger ist am Fahrwerk eines Kraftfahrzeuges durch wenigstens einen Schraubenbolzen zu befestigen. In dem Bremsträger sind zwei Führungsbolzen aufgenommen, um einen Bremssattel relativ zu dem Bremsträger verschiebbar zu führen. Ein Stellglied dient dazu, Reibbeläge mit einer Bremsscheibe in/außer Reibungseingriff zu bringen. Eine separat handhabbare, an die Fahrzeugscheibenbremse angebaute Baueinheit hat einen Elektromotor um über einen Rotations-Translationsumsetzer das Stellglied im Sinne eines In-/Außer-Reibeingriffbringens der Bremsbeläge mit der Bremsscheibe zu betätigen. Eine Aufnahmeöffnung für einen der beiden Führungsbolzen des Bremssattels und/oder einen der beiden Befestigungsbolzen des Bremsträgers ist in radialer Richtung der Rotationsachse der Bremsscheibe näher als für den anderen Führungsbolzen bzw. den anderen Befestigungsbolzen. Weiterhin beträgt der Abstand zwischen der Aufnahmeöffnung für den einen Führungsbolzen und dessen direkt benachbarter Aufnahmeöffnung für einen Befestigungsbolzen etwa 10 % bis etwa 50 % des Abstandes zwischen der Aufnahmeöffnung für den anderen Führungsbolzen und dessen direkt benachbarter Aufnahmeöffnung für einen Befestigungsbolzen. Durch diese Dimensionierungsvorgabe ist es möglich, Bauraum für die einen Smart-Aktuator aufweisende Parkbremseinheit in die innere Radkontur bei Kompaktklasse-Fahrzeugen zu schaffen.

Die Betriebsbremse kann eine hydraulische Betriebsbremse sein. Das Stellglied kann eine Hydraulikkammer aufweisen, in der ein Bremskolben aufgenommen ist. In der Hydraulikkammer kann ein Bremskolben abdichtend und axial längsverschieblich aufgenommen sein. Zur Versorgung der Hydraulikkammer mit Hydraulikfluid kann eine Bremsdruckgebereinheit dienen, beispielsweise eine über ein Bremspedal betätigbare Bremskraftverstärker/Hauptzylinder-Einheit. Eine Betätigung der Bremsdruckgebereinheit kann das Hydraulikfluid in der Hydraulikkammer unter Druck setzen. Als Folge hiervon kann sich der Bremskolben axial verschieben, um Reibbeläge mit einer Bremsscheibe in Reibungseingriff zu bringen. Wird die Betätigung der Bremsdruckgebereinheit beendet, kann Hydraulikfluid aus der Hydraulikkammer wieder zurück in Richtung der Bremsdruckgebereinheit strömen, so dass der Bremskolben sich wieder zurück verschiebt, um die Reibbeläge und die Bremsscheibe außer Eingriff zu bringen.

In der an die Fahrzeugscheibenbremse angebaute Baueinheit kann eine Steuer- und Leistungselektronik zumindest teilweise aufgenommen sein um den Elektromotor mit Steuer-und/oder Leistungssignalen zu speisen. Damit kann die Fahrzeugscheibenbremse nicht nur die vorstehend erläuterte Funktion einer (hydraulischen) Betriebsbremse erfüllen, sondern kann auch als Park- oder Feststellbremse verwendet werden. Diese Baueinheit hat einen Elektromotor sowie zugehörige Steuer- und Leistungselektronik und ggf. ein Getriebe. Sie dient dazu, unabhängig von der (hydraulischen) Betätigung des Bremskolben diesen über einen Rotations-Translationsumsetzer, zum Beispiel eine Spindel-Mutteranordnung, im Sinne eines In-/ Außer-Reibeingriffbringen der Bremsbeläge mit der Bremsscheibe zu betätigen. Dabei kann der Rotations-Translationsumsetzer ebenfalls der Baueinheit zugeordnet, oder von dieser getrennt sein. In beiden Fällen ist er dem Elektromotor, oder, soweit vorhanden, dem Getriebe nachgeschaltet.

Das Getriebe hat eine hohe Gesamtuntersetzung (beispielsweise etwa 100 bis 200 : 1) der Drehzahl, damit der Elektromotor relativ klein gewählt werden kann und dennoch eine ausreichend große Zuspannkraft im Parkbremsbetrieb sichergestellt ist. Die Baueinheit ist eine separat handhabbare Unterbaugruppe, die nicht nur mit der gezeigten Scheibenbremse, sondern auch mit anderen Scheibenbremsen kombinierbar ist. Der Elektromotor kann dabei so angeordnet sein, dass seine Abtriebswelle sich in etwa parallel zur Verschiebungsachse des Bremskolbens erstreckt und auf der vom Bremskolben abgewandten Seite aus dem Gehäuse des Elektromotors austritt. Diese Anordnung ist besonders platzsparend. Alternativ kann der Elektromotor auch so angeordnet sein, dass seine Abtriebswelle sich in etwa rechtwinkelig zur Verschiebungsachse des Bremskolbens erstreckt.

So ist bei einer ersten Bauvariante vorgesehen, die Aufnahmeöffnung für einen der beiden Führungsbolzen des Bremssattels und/oder einen der beiden Befestigungsbolzen des Bremsträgers in radialer Richtung näher an die Rotationsachse der Bremsscheibe zu legen als den anderen Führungsbolzen bzw. den anderen Befestigungsbolzen. Alternativ oder zusätzlich kann auch die Aufnahmeöffnung für eine der beiden Führungsbolzen und/oder einen der beiden Befestigungsbolzen in Umfangsrichtung versetzt sein.

Bei bekannten Fahrzeugscheibenbremsen sind vier oder mehr Bolzen vorgesehen - zwei als Führungsbolzen für den Bremssattel am Bremsträger und zwei als Befestigungsbolzen für den Bremsträger am Fahrwerk - die ein in der Regel symmetrisches Trapez aufspannen. Hingegen kann bei der hier vorgestellten Bauvariante das durch die vier Bolzen bzw. deren Aufnahmeöffnungen aufgespannte, gedachte Trapez zu einem asymmetrischen Viereck gewandelt sein. Der gewünschte eintretende Effekt ist jedoch dabei, dass für die Parkbrems-Baueinheit im Innenraum des Fahrzeugrades mehr Freiraum geschaffen wird. Dies erlaubt es, die (Smart-) Aktuator-Baueinheit trotz ihres gegenüber herkömmlichen Parkbremsbaugruppen gestiegenen Volumens auch an Fahrzeugscheibenbremsen in Fahrzeugrädern der Kompaktklasse zu verbauen. Außerdem ist der Änderungsaufwand an den Komponenten herkömmlicher Fahrzeugscheibenbremsen sehr gering. Des Weiteren ist durch die vorstehend beschrieben Maßnahme der Zugang zu den vier Bolzen bei der De/Montage bequem zu gewährleisten. Das "Versetzen" des Befestigungsbolzen in radialer Richtung und/oder auch in Umfangsrichtung am Achsschenkel hat jedoch zur Folge, dass damit die mechanische Schnittstelle zum Fahrwerk auf Seiten des Fahrzeugherstellers zu ändern ist. Ein Vorteil des radial weiter innen liegenden Bolzens ist, dass er mechanisch weniger belastet ist; er kann also einen geringeren Durchmesser haben und damit geringeren Platzbedarf haben.

Das Maß, um das die Aufnahmeöffnung für den einen Führungsbolzen in radialer Richtung näher an die Rotationsachse der Bremsscheibe zu legen ist als die Aufnahmeöffnung für den anderen Führungsbolzen, beträgt etwa 150% bis etwa 50 % des Abstandes einer Aufnahmeöffnung für den anderen Führungsbolzen von der ihr direkt benachbarten Aufnahmeöffnung für einen Befestigungsbolzen. Unter "zu der Aufnahmeöffnung des anderen Führungsbolzens direkt benachbarte Aufnahmeöffnung für einen Befestigungsbolzen" ist die Aufnahmeöffnung des Befestigungsbolzens verstanden, mit der die Aufnahmeöffnung des anderen Führungsbolzens eine Kante (und nicht eine Diagonale) des gedachten asymmetrischen Vierecks begrenzt. Mit anderen Worten beträgt das Maß, um das die Aufnahmeöffnung für den einen Führungsbolzen in radialer Richtung näher an die Rotationsachse der Bremsscheibe zu legen ist als die Aufnahmeöffnung für den anderen Führungsbolzen etwa 150 % bis etwa 50 % der Länge der Kante des asymmetrischen Vierecks zwischen der Aufnahmeöffnung des anderen Führungsbolzens und dessen direkt benachbarter Aufnahmeöffnung für den Befestigungsbolzen.

In einer anderen Bauvariante ist vorgesehen, dass einer der beiden Führungsbolzen und/ oder einer der beiden Befestigungsbolzen in axialer Richtung gegenüber dem anderen Führungsbolzen in axialer Richtung weniger weiter vorragt, und dazu eingerichtet ist, als Schwenklager für den Bremssattel mit daran angebauter Parkbrems-Baueinheit bei Fehlen des anderen Führungsbolzens zu dienen.

Ersichtlich handelt es sich bei beiden Bauvarianten um alternative Lösungen für die eingangs geschilderten Probleme, wie eine Fahrzeugscheibenbremse mit einer zusätzlichen, einen Smart-Aktuator aufweisenden Parkbremseinheit in die innere Radkontur bei Fahrzeugen der Kompaktklasse einzupassen ist. Bei beiden Bauvarianten wird das gemeinsame Konzept verfolgt, durch vordergründig minimale Änderungen an bestehenden und im Serieneinsatz erprobten Komponenten von Fahrzeugscheibenbremsen angesichts der beengten Verhältnisse im Radinneren bei Kompaktfahrzeugen Raum "zu schaffen" für eine einen Smart-Aktuator aufweisende Parkbremseinheit und gleichzeitig die Zugänglichkeit bei der Wartung zu verbessern. Bei genauerem Hinsehen ist festzustellen, dass es sich um eine klare Abkehr von bisherigen Gestaltungsvorgaben handelt. Vergleichbar mit der ersten Bauvariante erleichtert auch diese zweite Bauvariante den Zugang zu den Führungsbolzen für die Bremsbeläge und/ oder zu den Befestigungsbolzen der Fahrzeugbremse am Fahrwerk bei der De/Montage trotz an den Bremssattel angebauter Parkbremseinheit.

Bei der zweiten Bauvariante ist es einfach möglich, solange oder nachdem der weiter vorragende Führungsbolzen entfernt ist, den Bremssattel um den weniger weit vorragenden Führungsbolzen gegenüber dem Bremsträger aufzuschwenken. Damit ist der Zugang zu den Reibbelägen, beispielsweise für deren Erneuerung, sehr einfach möglich.

Kurzbeschreibuno der Zeichnung Weitere Ausgestaltungen sind in den abhängigen Ansprüchen und in der nachfolgenden Beschreibung erläutert. Dabei zeigt
- Figur 1: eine erste Bauvariante einer Fahrzeugscheibenbremse in Vorderansicht, d. h. im montierten Zustand von der fahrzeugäußeren Seite her gesehen;

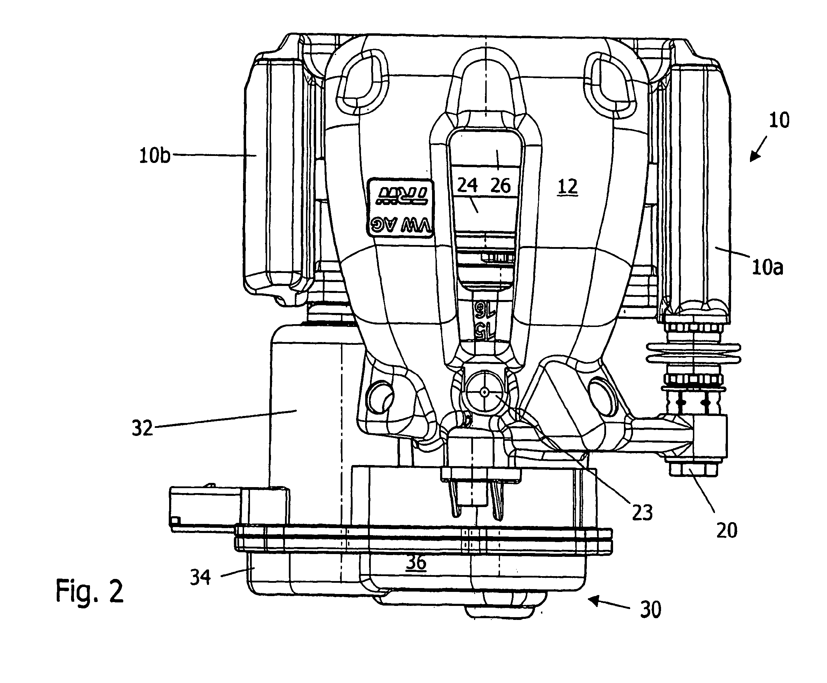

- Figur 2: die Fahrzeugscheibenbremse gemäß Figur 1 in Draufsicht, von oben auf den Bremssattel;

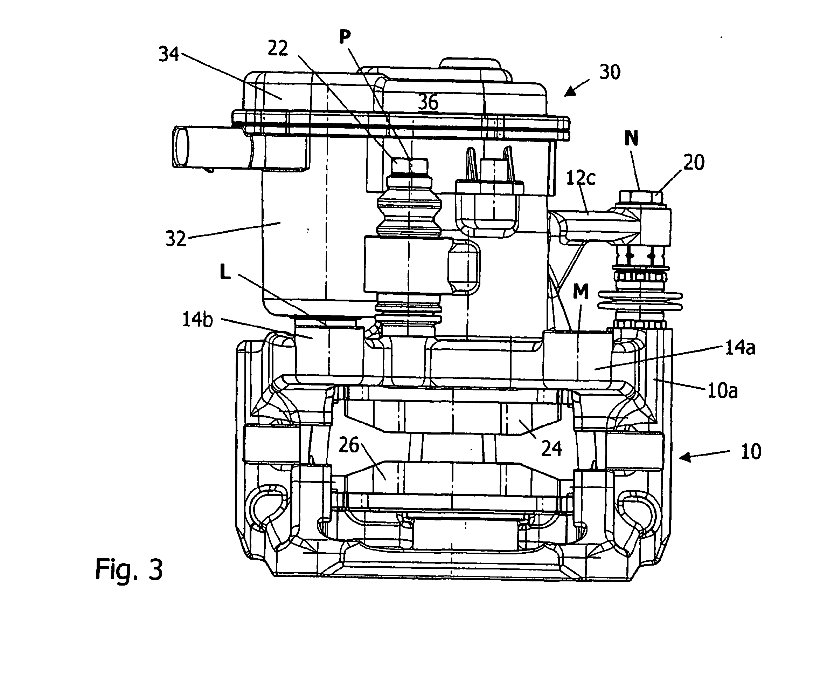

- Figur 3: die Fahrzeugscheibenbremse gemäß den Figuren 1 und 2 von unten auf den Bremsträger;
- Figur 4: eine schematische Darstellung der Geometrie der Aufnahmeöffnungen der Führungsbolzen und der Befestigungsbolzen der Fahrzeugscheibenbremse gemäß den Figuren 1 bis 3;

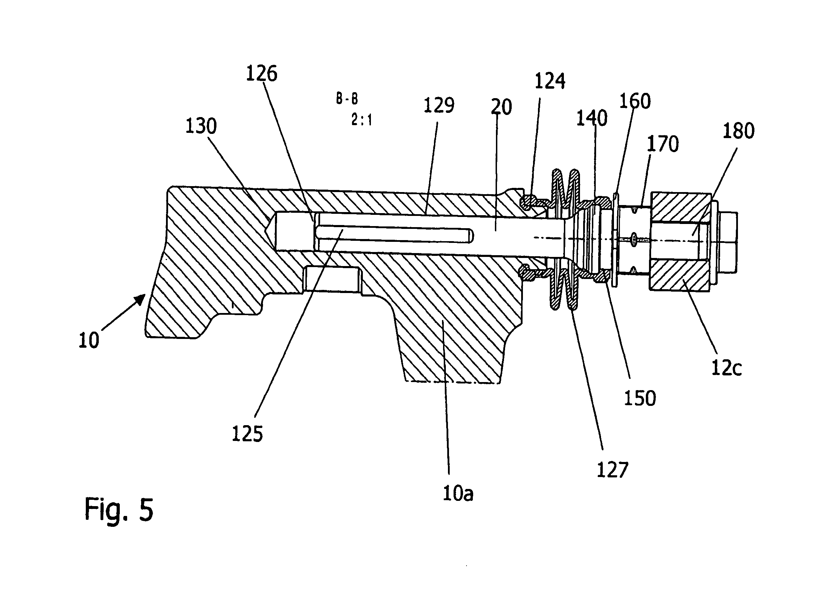

- Figur 5: eine vergrößerte Längsschnittansicht eines kurzen Führungsbolzens der Fahrzeugscheibenbremse gemäß den Figuren 1 bis 3;
- Figur 6: eine vergrößerte Längsschnittansicht eines langen Führungsbolzens der Fahrzeugscheibenbremse gemäß den Figuren 1 bis 3;
- Figur 7: eine zweite Bauvariante einer Fahrzeugscheibenbremse in Vorderansicht, d.h. im montierten Zustand von der fahrzeugäußeren Seite her gesehen;
- Figur 8: die Fahrzeugscheibenbremse gemäß Figur 7 in Draufsicht, von oben auf den Bremssattel;
- Figur 9: die Fahrzeugscheibenbremse gemäß den Figuren 7 und 8 von unten auf den Bremsträger;
- Figur 10: eine vergrößerte Längsschnittansicht eines kurzen Führungsbolzens der Fahrzeugscheibenbremse gemäß den Figuren 7 bis 9; und
- Figur 11: eine vergrößerte Längsschnittansicht eines langen Führungsbolzens der Fahrzeugscheibenbremse gemäß den Figuren 7 bis 9.

### Detaillierte Beschreibung der Zeichnungen

In den nachfolgenden Figuren sind unterschiedliche Ausführungsbeispiele dargestellt, wobei einander funktionsgleiche oder funktionsähnliche Bauteile mit übereinstimmenden Bezugszeichen gekennzeichnet sind.

Ein aus Gussstahl gefertigter Bremsträger 10 hat zwei Arme 10a, 10b. Ein Bremssattel 12 übergreift den Bremsträger 10. In den dargestellten Varianten ist der Bremssattel 12 als einteiliger Schwimmsattel ausgestaltet. Der Bremsträger 10 ist fest am Fahrwerk eines Kraftfahrzeuges befestigt, hierzu dienen zwei voneinander durch einen Steg 16 beabstandete Löcher 14a, 14b und (nicht gezeigte) Befestigungsschraubenbolzen.

In dem Bremsträger 10 sind zwei voneinander beabstandete, im wesentlichen parallel orientierte Führungsbolzen 20, 22 aufgenommen, um den Bremssattel 12 relativ zu dem Bremsträger 10 längsverschieblich parallel zu einer Achse R zu führen, wobei die Achse R die Rotationsachse einer nicht veranschaulichten Bremsschreibe ist. In dem Bremssattel befindet sich eine nicht gezeigte Hydraulikkammer, in der ein nicht gezeigter Bremskolben abdichtend und axial längsverschieblich aufgenommen ist. Zur Versorgung der Hydraulikkammer mit Hydraulikfluid ist außen am Bremssattel ein Anschluss 23 vorhanden, der mit einer nicht gezeigten Bremsdruckgebereinheit, beispielsweise einer über ein Bremspedal betätigbaren Bremskraftverstärker/Hauptzylinder-Einheit, in Verbindung steht.

Bei einer Betätigung der Bremsdruckgebereinheit wird das Hydraulikfluid in der Hydraulikkammer unter Druck gesetzt, so dass sich der Bremskolben axial verschiebt, um Reibbeläge 24, 26 mit der nicht gezeigten Bremsscheibe in Reibungseingriff zu bringen. Wird die Betätigung der Bremsdruckgebereinheit beendet, kann Hydraulikfluid aus der Hydraulikkammer wieder zurück in Richtung der Bremsdruckgebereinheit strömen, so das der Bremskolben sich wieder zurück verschiebt, um die Reibbeläge 24, 26 außer Eingriff mit der nicht gezeigten Bremsscheibe zu bringen. Ein radial umlaufendes Dichtelement, das den Bremskolben in der Hydraulikkammer abdichtet, unterstützt die Rückstellung des Bremskolben, indem es nach dem "Roll-back"-Prinzip eine elastische Rückstellkraft auf den Bremskolben ausübt.

Damit die Fahrzeugscheibenbremse in dieser ersten Bauvariante nicht nur die zuvor erläuterte Funktion einer hydraulischen Betriebsbremse erfüllen kann, sondern auch als Park- oder Feststellbremse verwendet werden kann, ist eine separat handhabbare, an die Fahrzeugscheibenbremse angebaute Baueinheit 30 vorgesehen. Diese Baueinheit hat einen Elektromotor 32 sowie zugehörige integrierte Steuer- und Leistungselektronik 34 und ein Getriebe 36. Diese Baueinheit 30 dient dazu, unabhängig von der hydraulischen Betätigung des Bremskolbens diesen über einen Rotations-Translationsumsetzer, zum Beispiel eine nicht gezeigte Spindel-Mutteranordnung, im Sinne eines In- / Außer-Reibeingriffbringen der Bremsbeläge mit der Bremsscheibe zu bewegen. Dabei kann der Rotations-Translationsumsetzer ebenfalls der Baueinheit zugeordnet, oder von dieser getrennt sein. In beiden Fällen ist er dem Elektromotor 32 und dem Getriebe 36 nachgeschaltet. Der Rotations-Translationsumsetzer kann aber auch in das Getriebe integriert oder Teil des Getriebes 36 sein.

Das Getriebe hat eine Gesamtuntersetzung von etwa 200 : 1. Die Baueinheit ist eine separat handhabbare Unterbaugruppe, die nicht nur mit der gezeigten Fahrzeugscheibenbremse, sondern auch mit anderen Scheibenbremsen verbaubar ist. Der Elektromotor kann dabei so angeordnet sein, dass seine Abtriebswelle sich in etwa parallel zur Verschiebungsachse des Bremskolbens erstreckt und auf der vom Bremskolben abgewandten Seite aus dem Gehäuse des Elektromotors austritt. Alternativ kann der Elektromotor auch so angeordnet sein, dass seine Abtriebswelle sich in etwa rechtwinkelig zur Verschiebungsachse des Bremskolbens erstreckt. Zu weiteren Details der Anordnung der Fahrzeugscheibenbremse sei auf die EP 0 996 560 B verwiesen.

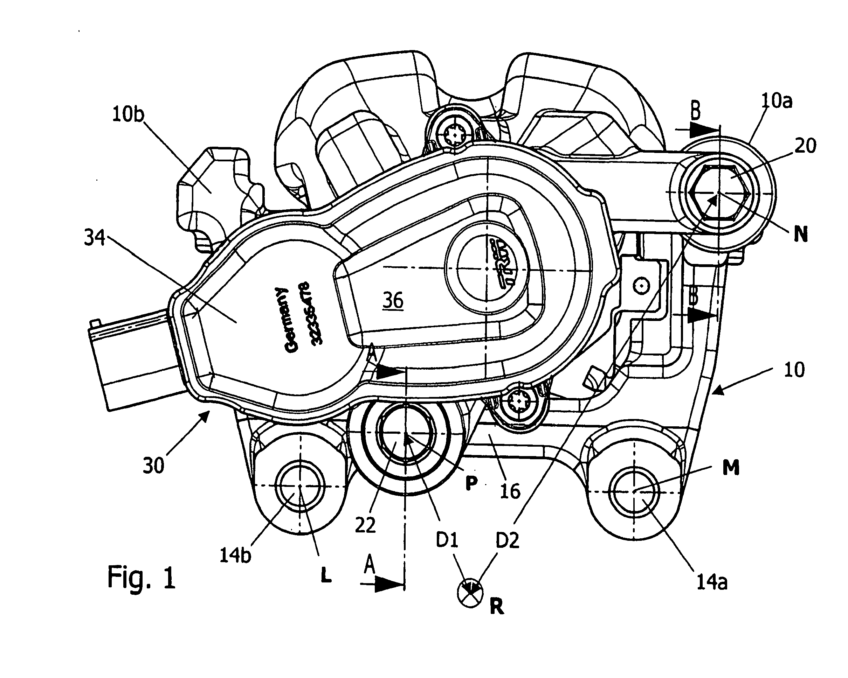

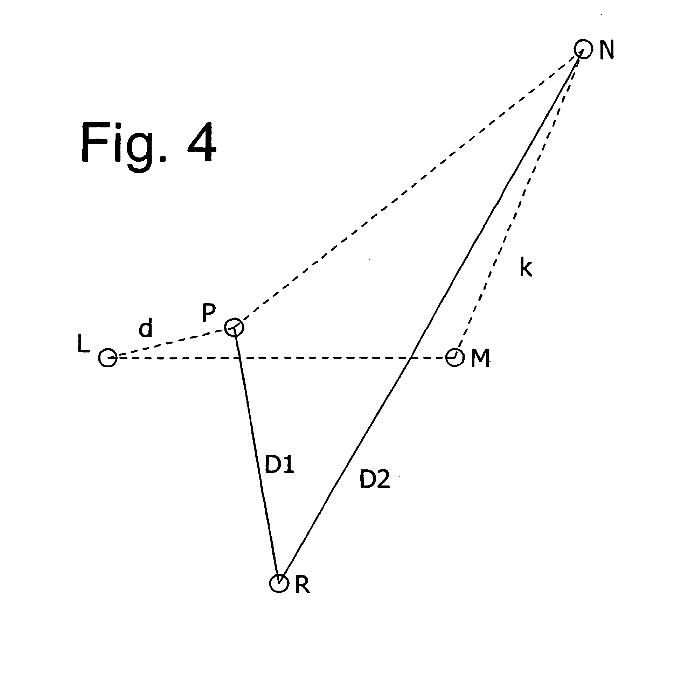

So ist bei einer ersten Bauvariante vorgesehen, einen der beiden Führungsbolzen - 22 - bzw. dessen Aufnahmeöffnung des Bremssattels 12 in radialer Richtung näher an die Rotationsachse R der (nicht gezeigten) Bremsscheibe zu legen als den anderen Führungsbolzen - 20 - bzw. dessen Aufnahmeöffnung. Bei dieser Bauvariante ist das durch die vier Bolzen bzw. deren Aufnahmeöffnungen aufgespannte Viereck mit den Eckpunkten L, M, N, P asymmetrisch (Siehe Fig. 1 und 4).

Das Maß, um das die Aufnahmeöffnung P für den einen Führungsbolzen in radialer Richtung näher an die Rotationsachse R der Bremsscheibe zu legen ist als die Aufnahmeöffnung N für den anderen Führungsbolzen beträgt etwa 150 % bis etwa 50 % des Abstandes einer Aufnahmeöffnung N für den anderen Führungsbolzen von der ihr direkt benachbarten Aufnahmeöffnung M für einen Befestigungsbolzen.

Unter Bezug auf Fig. 4 ist der Abstand D1 der Aufnahmeöffnung P für den einen Führungsbolzen von der Rotationsachse R um etwa 90 % des Abstandes k der Aufnahmeöffnung N für den anderen Führungsbolzen von der ihr direkt benachbarten Aufnahmeöffnung M für einen Befestigungsbolzen gegenüber dem Abstand D2 des anderen Führungsbolzens von der Rotationsachse R verringert.

Wie ebenfalls in Fig. 4 gezeigt ist, beträgt der Abstand d zwischen der Aufnahmeöffnung P für den einen Führungsbolzen und dessen direkt benachbarter Aufnahmeöffnung L für einen Befestigungsbolzen etwa 30 % des Abstandes zwischen der Aufnahmeöffnung N für den anderen Führungsbolzen und dessen direkt benachbarter Aufnahmeöffnung M für einen Befestigungsbolzen.

Der Bremssattel 12 gleitet axial auf den beiden Führungsbolzen 20, 22 relativ zu dem Bremsträger 10. Dabei ist der als Schwenklager ausgestaltete Führungsbolzen 20 von im Wesentlichen von zylindrischer Gestalt, wobei er üblicherweise drei gleichmäßig auf dem Umfang verteilte Abflachungen 125 aufweist, die sich von dem Einführende 126 des Führungsbolzens bis etwa zur Hälfte seiner axialen Länge erstrecken. Diese Abflachungen 125 dienen dazu, einen Spalt zwischen der Oberfläche des Führungsbolzens und der Wandung 129 der Aufnahmeöffnung zu bilden. Durch diesen Spalt kann während des Einschiebens des Führungsbolzens in die Aufnahmeöffnung die Luft aus der Kammer zwischen dem Boden 130 der Aufnahmeöffnung und der Stirnseite 126 des Führungsbolzens entweichen. Des Weiteren dienen die Abflachungen 125 dazu, dass sich Schmiermittel auf dem Schaft des Führungsbolzens gut verteilen kann.

Der Führungsbolzen 20 weist einen gestauchten, verdickten Kopfbereich 140 auf, in den eine Nut 150 eingestochen ist. Die zum Schaft des Führungsbolzens 20 weisende Nutseitenfläche ist von geringerem Außendurchmesser als die entgegengesetzte Nutseitenfläche. Die Nutseitenfläche mit größerem Außendurchmesser ist Teil eines als Schutzscheibe 160 ausgebildeten Bereiches des Führungsbolzens 20. An die Schutzscheibe 160 schließt ein Außensechskant-Kopf 170 an. Er trägt eine nicht dargestellte, koaxial zum Schaft des Führungsbolzens 20 orientierte Gewindebohrung. Mit dieser Gewindebohrung wird der Bremssattel durch einen Schraubenbolzen 180 verschraubt. Dazu hat der Bremssattel 12 einen in radialer Richtung abstehenden Flansch 12c, in dem eine Durchgangsöffnung für die Aufnahme des Schraubenbolzens 180 vorgesehen ist.

Ein den Führungsbolzen 20 in Längsrichtung teilweise umgebender Faltenbalg 127 weist an seinem einen Ende einen Wulst auf, der in der Nut 150 mit Vorspannung aufgenommen ist. Der Wulst dichtet in dieser Nut 150 ab. Er wird vor Beschädigungen durch Werkzeuge, die beim Anziehen der Befestigungsschrauben während der Befestigung des Schwimmsattels an der Stirnfläche des Führungsbolzens das von dem Verschrauben auf die Führungsbolzen einwirkende Drehmoment aufnehmen, mittels der Schutzscheibe 160 geschützt. Der Bremsträger 10 weist eine Nut 124 auf, die zu der Aufnahmeöffnung koaxial verläuft. Der Faltenbalg 127 weist an seinem anderen Ende einen weiteren Wulst auf, der in der Nut 124 unter Vorspannung sitzt.

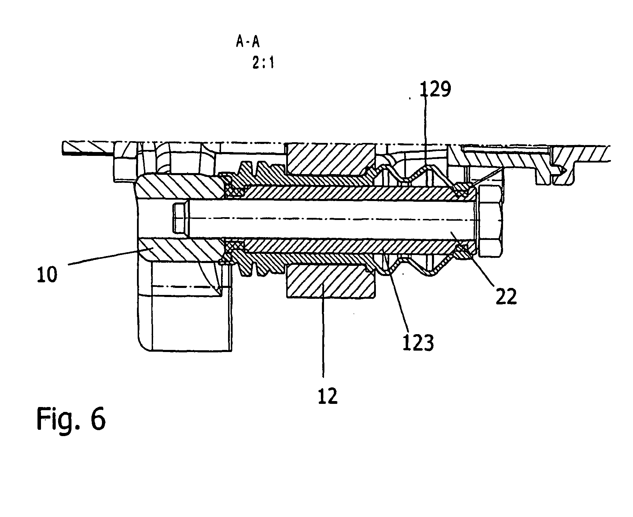

Fig. 6 veranschaulicht die Abstützung des Bremssattels 12 am Bremsträger 10 mittels des Führungsbolzens 22, der in eine Aufnahmeöffnung im Bremsträger 10 eingeschraubt ist. Eine Hülse 123 liegt zwischen dem Führungsbolzen 22 und dem Sattel 12. Die Gleitführung ist in vergleichbarer Weise wie bei dem anderen Führungsbolzen 20 mittels eines Faltenbalges 129 abgedichtet.

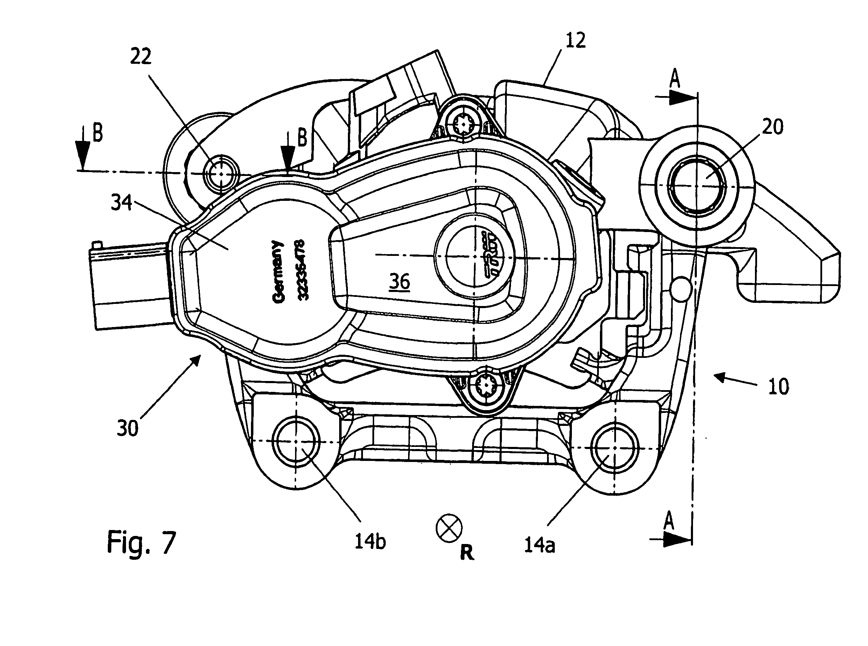

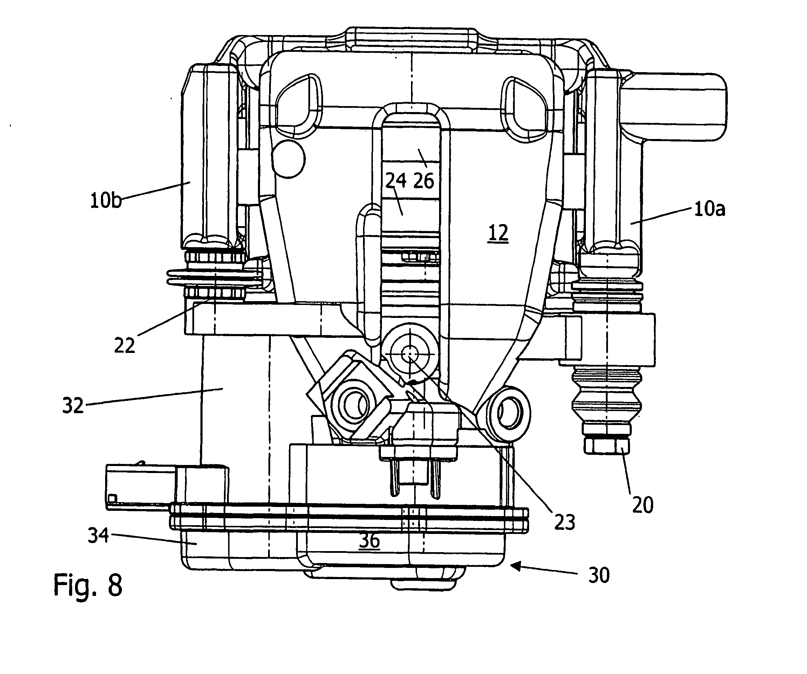

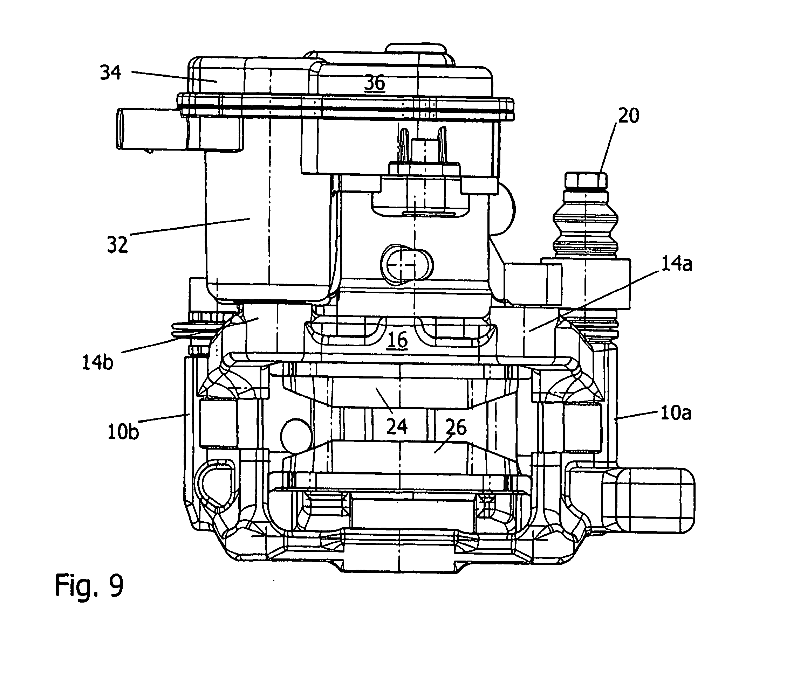

Fig. 7 - 11 veranschaulichen Details einer zweiten Bauvariante. Ein aus Gussstahl gefertigter Bremsträger 10 hat zwei Arme 10a, 10b. Ein Bremssattel 12 übergreift den Bremsträger 10. In den dargestellten Varianten ist der Bremssattel 12 als einteiliger Schwimmsattel ausgestaltet. Der Bremsträger 10 ist fest am Fahrwerk eines Kraftfahrzeuges befestigt, hierzu dienen zwei voneinander durch einen Steg 16 beabstandete Löcher 14a, 14b und (nicht gezeigte) Befestigungsschraubenbolzen.

In dem Bremsträger 10 sind zwei voneinander beabstandete, im wesentlichen parallel orientierte Führungsbolzen 20, 22 aufgenommen, um den Bremssattel 12 relativ zu dem Bremsträger 10 längsverschieblich parallel zu einer Achse R zu führen, wobei die Achse R die Rotationsachse einer nicht veranschaulichten Bremsschreibe ist. In dem Bremssattel befindet sich eine nicht gezeigte Hydraulikkammer, in der ein nicht gezeigter Bremskolben abdichtend und axial längsverschieblich aufgenommen ist. Zur Versorgung der Hydraulikkammer mit Hydraulikfluid ist außen am Bremssattel ein Anschluss 23 vorhanden, der mit einer nicht gezeigten Bremsdruckgebereinheit, beispielsweise einer über ein Bremspedal betätigbaren Bremskraftverstärker/Hauptzylinder-Einheit, in Verbindung steht.

Bei einer Betätigung der Bremsdruckgebereinheit wird das Hydraulikfluid in der Hydraulikkammer unter Druck gesetzt, so dass sich der Bremskolben axial verschiebt, um Reibbeläge 24, 26 mit der nicht gezeigten Bremsscheibe in Reibungseingriff zu bringen. Wird die Betätigung der Bremsdruckgebereinheit beendet, kann Hydraulikfluid aus der Hydraulikkammer wieder zurück in Richtung der Bremsdruckgebereinheit strömen, so das der Bremskolben sich wieder zurück verschiebt, um die Reibbeläge 24, 26 außer Eingriff mit der nicht gezeigten Bremsscheibe zu bringen. Ein radial umlaufendes Dichtelement, das den Bremskolben in der Hydraulikkammer abdichtet, unterstützt die Rückstellung des Bremskolben, indem es nach dem "Rollback"-Prinzip eine elastische Rückstellkraft auf den Bremskolben ausübt.

Damit die Fahrzeugscheibenbremse in dieser zweiten Bauvariante nicht nur die zuvor erläuterte Funktion einer hydraulischen Betriebsbremse erfüllen kann, sondern auch als Park-oder Feststellbremse verwendet werden kann, ist eine separat handhabbare, an die Fahrzeugscheibenbremse angebaute Baueinheit 30 vorgesehen. Diese Baueinheit hat einen Elektromotor 32 sowie zugehörige integrierte Steuer- und Leistungselektronik 34 und ein Getriebe 36. Diese Baueinheit 30 dient dazu, unabhängig von der hydraulischen Betätigung des Bremskolbens diesen über einen Rotations-Translationsumsetzer, zum Beispiel eine nicht gezeigte Spindel-Mutteranordnung, im Sinne eines In- / Außer-Reibeingriffbringen der Bremsbeläge mit der Bremsscheibe zu bewegen. Dabei kann der Rotations-Translationsumsetzer ebenfalls der Baueinheit zugeordnet, oder von dieser getrennt sein. In beiden Fällen ist er dem Elektromotor 32 und dem Getriebe 36 nachgeschaltet. Der Rotations-Translationsumsetzer kann aber auch in das Getriebe integriert oder Teil des Getriebes 36 sein.

Das Getriebe hat eine hohe Gesamtuntersetzung von etwa 200 : 1. Die Baueinheit ist eine separat handhabbare Unterbaugruppe, die nicht nur mit der gezeigten Fahrzeugscheibenbremse, sondern auch mit anderen Scheibenbremsen kombinierbar ist. Der Elektromotor kann dabei so angeordnet sein, dass seine Abtriebswelle sich etwa parallel zur Verschiebungsachse des Bremskolbens erstreckt und auf der vom Bremskolben abgewandten Seite aus dem Gehäuse des Elektromotors austritt.

Diese Anordnung ist besonders platzsparend. Alternativ kann der Elektromotor auch so angeordnet sein, dass seine Abtriebswelle sich in etwa rechtwinkelig zur Verschiebungsachse des Bremskolbens erstreckt. Zu weiter Details der Anordnung der Fahrzeugscheibenbremse sei auf die EP 0 996 560 B verwiesen.

Bei der zweiten Bauvariante ist vorgesehen, dass einer der beiden Führungsbolzen - 20 - des Bremssattels 12 und/ oder einer der beiden Befestigungsbolzen in axialer Richtung gegenüber dem anderen Führungsbolzen - 22 - in axialer Richtung weiter vorragt. Der weniger weit vorragende der beiden Führungsbolzen 22 ist dazu eingerichtet, als Schwenklager für den Bremssattel mit daran angebauter Parkbrems-Baueinheit bei Fehlen des anderen Führungsbolzens 20 zu dienen. Der Bremssattel 12 hat zwei Befestigungsflansche; einen ersten Befestigungsflansch 12a, der mittels des Führungsbolzens 20, an dem Arm 10a des Bremsträgers 10 befestigt ist, und einen zweiten Befestigungsflansch 12b, der mittels des anderen Führungsbolzens 22, an dem anderen Arm 10b des Bremsträgers 10 befestigt ist.

Der Führungsbolzen 22 ragt weniger weit vor als der Führungsbolzen 20. Weiterhin ist der Kopf des Führungsbolzen 20 mit einem Außengewinde 200 versehen, das bei vom Bremsträger 10 entferntem Bremssattel 12 in ein entsprechendes Innengewinde einer Gewindebohrung 202 in dem zweiten Befestigungsflansch 12b einzuschrauben ist. Der Führungsbolzen 20 ist als Schwenklager ausgestaltet, indem er von im Wesentlichen von kreiszylindrischer Gestalt ist und in einer entsprechend runden Aufnahmeöffnung aufgenommen ist. Der Führungsbolzen 20 hat gleichmäßig auf dem Umfang verteilte Abflachungen 125, die sich von dem Einführende 126 des Führungsbolzens bis über die Hälfte seiner axialen Länge erstrecken. Diese Abflachungen 125 dienen dazu, einen Spalt zwischen der Oberfläche des Führungsbolzens und der Wandung 129 der Aufnahmeöffnung zu bilden. Durch diesen Spalt kann während des Einschiebens des Führungsbolzens in die Aufnahmeöffnung die Luft aus der Kammer zwischen dem Boden 130 der Aufnahmeöffnung und der Stirnseite 126 des Führungsbolzens entweichen. Des Weiteren dienen die Abflachungen 125 dazu, dass sich Schmiermittel auf dem Schaft des Führungsbolzens gut verteilen kann.

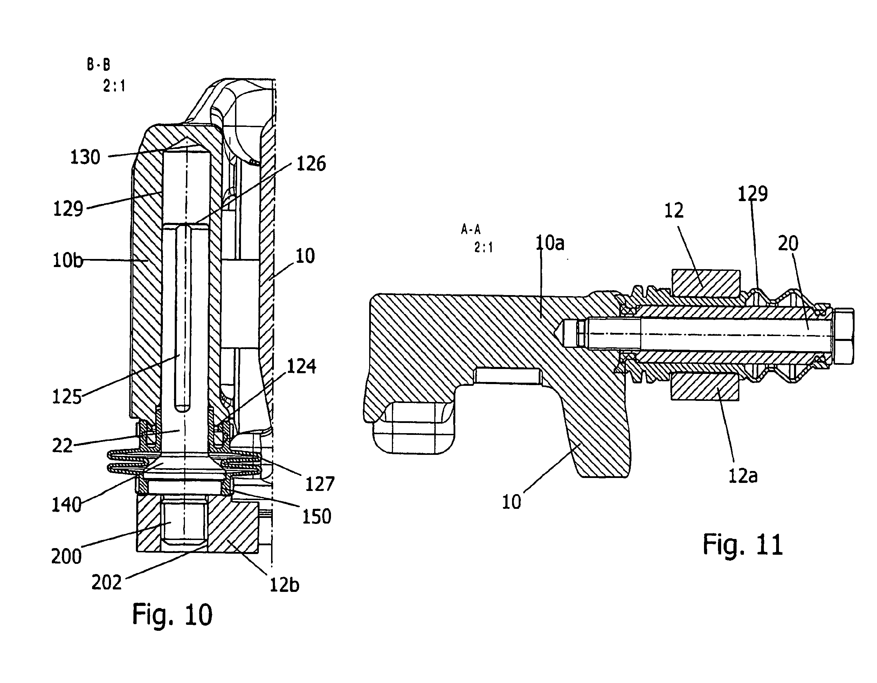

Der Führungsbolzen 22 weist einen gestauchten, verdickten Kopfbereich 140 auf, in den eine Stufe 150 eingestochen ist. Die zum Schaft des Führungsbolzens 20 weisende Nutseitenfläche dient als Widerlager für einen Faltenbalg 127, der an seinem einen Ende einen Wulst aufweist, der an der Stufe 150 mit Vorspannung aufgenommen ist. Der Faltenbalg 127 weist an seinem anderen Ende einen weiteren Wulst auf, der in einer Nut 124 an dem Bremssattel 10 unter Vorspannung sitzt (siehe Fig. 10).

Fig. 11 veranschaulicht die Abstützung des Bremssattels 12 am Bremsträger 10 mittels des Führungsbolzens 20, der in eine Aufnahmeöffnung im Bremsträger 10 eingeschraubt ist. Eine Hülse 123 liegt zwischen dem Führungsbolzen 20 und dem Sattel 12. Die Gleitführung ist in vergleichbarer Weise wie bei dem anderen Führungsbolzen 22 mittels eines Faltenbalges 129 abgedichtet.

Diese beiden Bauvarianten einer als Betriebsbremse und als Park- oder Feststellbremse ausgestalteten Fahrzeugscheibenbremse haben eine separat handhabbare Baueinheit angebaut, die einen Elektromotor hat um diese Scheibenbremse über einen Rotations-Translationsumsetzer im Sinne eines In-/Außer-Reibeingriffbringens der Bremsbeläge mit der Bremsscheibe zu betätigen. Um den von der Verwendung der Baueinheit herrührenden Platzbedarf in der inneren Radkontur bei Fahrzeugen insbesondere der Kompaktklasse zu schaffen, werden Änderungen an bestehenden und im Serieneinsatz erprobten Komponenten vorgenommen, die gleichzeitig die Zugänglichkeit bei der Wartung verbessern.

## Patentansprüche

1. Fahrzeugscheibenbremse, die als Betriebsbremse und als Park- oder Feststellbremse ausgestaltet ist, aufweisend
- einen Bremsträger (10), der am Fahrwerk eines Kraftfahrzeuges durch wenigstens einen Schraubenbolzen zu befestigen ist, und in dem Bremsträger (10) sind zwei Führungsbolzen (20, 22) aufgenommen, um einen Bremssattel (12) relativ zu dem Bremsträger (10) verschiebbar zu führen,
- ein Stellglied um Reibbeläge (24, 26) mit einer Bremsscheibe in/außer Reibungseingriff zu bringen, und
- eine separat handhabbare, an die Fahrzeugscheibenbremse angebaute Baueinheit (30), mit
-- einem Elektromotor (32) um über einen Rotatiöns-Translationsumsetzer das Stellglied im Sinne eines In-/Außer-Reibeingriffbringens der Bremsbeläge mit der Bremsscheibe zu betätigen, **dadurch gekennzeichnet, dass**
- eine Aufnahmeöffnung (M, L, N, P) für einen der beiden Führungsbolzen (20, 22) des Bremssattels (12) und/oder einen der beiden Befestigungsbolzen des Bremsträgers (10) in radialer Richtung der Rotationsachse (R) der Bremsscheibe näher ist als für den anderen Führungsbolzen (20, 22) bzw. den anderen Befestigungsbolzen, und
- der Abstand zwischen der Aufnahmeöffnung (N, P) für den einen Führungsbolzen (20, 22) und dessen direkt benachbarter Aufnahmeöffnung (L, M) für einen Befestigungsbolzen etwa 10 % bis etwa 50 % des Abstandes zwischen der Aufnahmeöffnung (P, N) für den anderen Führungsbolzen (22, 20) und dessen direkt benachbarter Aufnahmeöffnung (M, L) für einen Befestigungsbolzen beträgt

2. Fahrzeugscheibenbremse nach Anspruch 1, wobei die Betriebsbremse eine hydraulische Betriebsbremse ist.

3. Fahrzeugscheibenbremse nach Anspruch 1 oder 2, wobei das Stellglied eine Hydrautikkammer aufweist, in der ein Bremskolben aufgenommen ist.

4. Fahrzeugscheibenbremse nach einem der vorhergehenden Ansprüche, wobei in der an die Fahrzeugscheibenbremse angebauten Baueinheit (30) eine Steuer- und Leistungselektronik (34) zumindest teilweise aufgenommen ist um den Elektromotor (32) mit Steuer- und/oder Leistungssigrtaien zu speisen.

5. Fahrzeugscheibenbremse nach einem der vorhergehenden Ansprüche, aufweisend zwei Führungsbolzen (20, 22) für den Bremssattel (12) am Bremsträger (10) und zwei Befestigungsbolzen für den Bremsträger (10) am Fahrwerk, wobei durch die vier Bolzen bzw. deren Aufnahmeöffnungen (L, M, N, P) in axialer Richtung gesehen ein gedachtes asymmetrisches Viereck aufgespannt ist.

6. Fahrzeugscheibenbremse nach einem der vorhergehenden Ansprüche, wobei einer der zwei Führungsbolzen (20, 22) radial weiter innen liegend angeordnet ist, als der andere.

7. Fahrzeugscheibenbremse nach einem der vorhergehenden Ansprüche, wobei der radial weiter innen liegend angeordnete Führungsbolzen (20, 22) einen geringeren Durchmesser hat als der andere.

8. Fahrzeugscheibenbremse nach einem der vorhergehenden Ansprüche, wobei das Maß, um das die Aufnahmeöffnung (N, P) für den einen Führungsbolzen (20, 22) in radialer Richtung näher an die Rotationsachse (R) der Bremsscheibe zu legen ist als die Aufnahmeöffnung für den anderen Führungsbolzen (22, 20), etwa 150% bis etwa 50 % des Abstandes einer Aufnahmeöffnung (P, N) für den anderen Führungsbolzen (22, 20) von der ihr direkt benachbarten Aufnahmeöffnung (L, M) für einen Befestigungsbolzen beträgt.

9. Fahrzeugscheibenbremse nach einem der vorhergehenden Ansprüche, wobei der Bremssattel (12) einen in radialer Richtung abstehenden Flansch (12c) aufweist, in dem eine Durchgangsöffnung für die Aufnahme eines Schraubenbolzens (180) vorgesehen ist.

10. Fahrzeugscheibenbremse nach einem der vorhergehenden Ansprüche, wobei der Führungsbolzen (20) einen Kopfbereich (140) aufweist, in dem eine koaxial zum Schaft des Führungsbolzens (20) orientierte Gewindebohrung angeordnet ist, mit der der Bremssattel (12) durch den Schraubenbolzen (180) zu verschrauben ist.

11. Fahrzeugscheibenbremse, die als Betriebsbremse und als Park- oder Feststellbremse ausgestaltet ist, aufweisend
- einen Bremsträger (10), der am Fahrwerk eines Kraftfahrzeuges durch wenigstens einen Schraubenbolzen zu befestigen ist und in dem Bremsträger (10) sind zwei Führungsbolzen (20, 22) aufgenommen, um
- einen Bremssattel (12) relativ zu dem Bremsträger (10) verschiebbar zu führen,
- ein Stellglied um Reibbeläge (24, 26) mit einer Bremsscheibe in/außer Reibungseingriff zu bringen,
- eine separat handhabbare, an die Fahrzeugscheibenbremse angebaute Baueinheit (30), mit
-- einem Elektromotor (32) um über einen Rotations-Translationsumsetzer das Stellglied im Sinne eines In-/Außer-Reibeingriffbringens der Bremsbeläge mit der Bremsscheibe zu betätigen, **dadurch gekennzeichnet, dass**
- einer der beiden Führungsbolzen (20, 22) und/ oder einer der beiden Befestigungsbolzen in axialer Richtung gegenüber dem anderen Führungsbolzen (22, 20) in axialer Richtung weniger weit von dem Bremssattel (12) vorragt, und dazu eingerichtet ist, als Schwenklager für den Bremssattel (12) mit daran angebauter Parkbrems-Baueinheit bei Fehlen des anderen Führungsbolzens (22, 20) zu dienen.

12. Fahrzeugscheibenbremse nach Anspruch 11, wobei die Betriebsbremse ist eine hydraulische Betriebsbremse ist.

13. Fahrzeugscheibenbremse nach Anspruch 11 oder 12, wobei das Stellglied eine Hydraulikkammer aufweist, in der ein Bremskolben aufgenommen ist.

14. Fahrzeugscheibenbremse nach einem der Ansprüche 11 bis 13, wobei in der an die Fahrzeugscheibenbremse angebauten Baueinheit (30) eine Steuer- und Leistungselektronik (34) zumindest teilweise aufgenommen ist, um den Elektromotor (32) mit Steuer- und/oder Leistungssignalen zu speisen, und/oder sich die Hydraulikkammer in dem Bremssattel (12) befindet, in der der Bremskolben abdichtend und axial längsverschieblich aufgenommen ist, und wobei zur Versorgung der Hydraulikkammer mit Hydraulikfluid eine Bremsdruckgebereinheit dient, deren Betätigung das Hydraulikfluid in der Hydraulikkammer unter Druck setzt, wodurch sich der Bremskolben axial verschiebt, um Reibbeläge (24, 26) mit einer Bremsscheibe in Reibungseingriff zu bringen, und/oder
die Baueinheit (30) ein Getriebe (36) aufweist, dem ein Rotations-Translationsumsetzer zugeordnet ist, und/oder
der Elektromotor (32) so angeordnet ist, dass seine Abtriebswelle sich in etwa parallel zur Verschiebungsachse des Bremskolbens erstreckt und auf der vom Bremskolben abgewandten Seite aus dem Gehäuse des Elektromotors (32) austritt.

## Claims

1. Vehicle disk brake, which is designed as a service brake and as a parking or immobilizing brake, comprising
- a brake anchor plate (10), which is to be fastened to the chassis of a motor vehicle by means of at least one screw bolt, and in the brake anchor plate (10) two guide bolts (20, 22) are accommodated in order to guide a brake caliper (12) displaceably relative to the brake anchor plate (10),
- an actuating element for bringing friction linings (24, 26) into and out of frictional engagement with a brake disk,
- a separately manipulable assembly (30) that is built onto the vehicle disk brake and comprises
- an electric motor (32) in order via a rotary-to-linear motion converter to actuate the actuating element in the sense of bringing the brake linings into and out of frictional engagement with the brake disk,
**characterised in that**
- a location hole (M, N, L, P) for one of the two guide bolts (20, 22) of the brake caliper (12) and/or for one of the two fastening bolts of the brake anchor plate (10) is closer in radial direction to the axis of rotation (R) of the brake disk than a location hole for the other guide bolt (22, 20) and/or the other fastening bolt, and
- the distance between the location hole (N, P) for the one guide bolt (20, 22) and the location hole directly adjacent thereto (L, M) for a fastening bolt is ca. 10% to ca. 50% of the distance between the location hole (P, N) for the other guide bolt (22, 20) and the location hole directly adjacent thereto (M, L) for a fastening bolt.

2. Vehicle disk brake according to claim 1, wherein the service brake is a hydraulic service brake.

3. Vehicle disk brake according to claim 1 or 2, wherein the actuating element comprises a hydraulic chamber, in which a brake piston is accommodated.

4. Vehicle disk brake according to one of the preceding claims, wherein an electronic control and power unit (34) is at least partially accommodated in the assembly (30) built onto the vehicle disk brake, for supplying the electric motor (32) with control and/or power signals.

5. Vehicle disk brake according to one of the preceding claims, comprising two guide bolts (20, 22) for the brake caliper (12) on the brake anchor plate (10) and two fastening bolts for the brake anchor plate (10) on the chassis, wherein the four bolts and/or their location holes (L, M, N, P) viewed in axial direction define an imaginary asymmetrical quadrangle.

6. Vehicle disk brake according to one of the preceding claims, wherein one of the two guide bolts (20, 22) is disposed radially further in than the other.

7. Vehicle disk brake according to one of the preceding claims, wherein the guide bolt (20, 22) disposed radially further inwardly has a smaller diameter than the other guide bolt.

8. Vehicle disk brake according to one of the preceding claims, wherein the extent to which the location hole (N, P) for the one guide bolt (20, 22) is to be positioned in radial direction closer to the axis of rotation (R) of the brake disk than the location hole for the other guide bolt (22, 20) is ca. 150% to ca. 50% of the distance of a location hole (P,N) for the other guide bolt (22, 20) from the location hole (L, M) directly adjacent thereto for a fastening bolt.

9. Vehicle disk brake according to one of the preceding claims, wherein the brake caliper (12) comprises a flange (12c) projecting in radial direction, in which a through-opening is provided for receiving a screw bolt (180).

10. Vehicle disk brake according to one of the preceding claims, wherein the guide bolt (20) comprises a head region (140), disposed in which is a threaded bore, which is oriented coaxially with the shank of the guide bolt (20) and to which the brake caliper (12) is to be screw-connected by means of the screw bolt (180).

11. Vehicle disk brake, which is designed as a service brake and as a parking or immobilizing brake, comprising
- a brake anchor plate (10), which is to be fastened to the chassis of a motor vehicle by means of at least one screw bolt and in which two guide bolts (20, 22) are accommodated in order to guide
- a brake caliper (12) displaceably relative to the brake anchor plate (10),
- an actuating element for bringing friction linings (24, 26) into and out of frictional engagement with a brake disk,
- a separately manipulable assembly that is built onto the vehicle disk brake (30) and comprises
- an electric motor (32) in order via a rotary-to-linear motion converter to actuate the actuating element in the sense of bringing the brake linings into and out of frictional engagement with the brake disk,
**characterised in that**
- one of the two guide bolts (20, 22) and/or one of the two fastening bolts projects in axial direction relative to the other guide bolt (22, 20) in axial direction to a lesser extent from the brake caliper (12), and is devised so as to serve in the absence of the other guide bolt (22, 20) as a pivot bearing for the brake caliper (12) with the parking brake assembly built thereon.

12. Vehicle disk brake according to claim 11, wherein the service brake is a hydraulic service brake.

13. Vehicle disk brake according to claim 11 or 12, wherein the actuating element comprises a hydraulic chamber, in which a brake piston is accommodated.

14. Vehicle disk brake according to one of claims 11 to 13, wherein an electronic control and power device (34) is at least partially accommodated in the assembly (30) built onto the vehicle disk brake in order to supply the electric motor (32) with control and/or power signals, and/or
the hydraulic chamber, in which the brake piston is accommodated in a sealing and axially longitudinally displaceable manner, is situated in the brake caliper (12) and wherein to supply the hydraulic chamber with hydraulic fluid a brake pressure generating unit is used, the actuation of which pressurizes the the hydraulic fluid in the hydraulic chamber, with the result that the brake piston shifts axially in order to bring friction linings (24, 26) into frictional engagement with a brake disk, and/or
the assembly (30) comprises a gear (36), with which a rotary-to-linear motion converter is associated, and/or
the electric motor (32) is disposed in such a way that its output shaft extends approximately parallel to the axis of displacement of the brake piston and exits from the housing of the electric motor (32) at the side remote from the brake piston.

## Revendications

1. Frein à disque de véhicule conçu comme un frein de service et comme un frein de stationnement ou d'arrêt, présentant
- un support de frein (10) à fixer sur le châssis d'un véhicule automobile à l'aide d'au moins un boulon fileté et dans lequel support de frein (10) sont logés deux boulons de guidage (20, 22) pour guider en coulissement un étrier de frein (12) par rapport au support de frein (10),
- un actionneur pour mettre en/hors contact de friction des garnitures de friction (24, 26) avec un disque de frein,
- un module (30) manipulable séparément, monté sur le frein à disque de véhicule, comprenant
-- un moteur électrique (32) pour actionner par le biais d'un convertisseur de rotation en translation ledit actionneur pour la mise en/hors contact de friction des garnitures de frein avec le disque de frein, **caractérisé en ce que**
- une ouverture de logement (M, L, N, P) pour l'un des deux boulons de guidage (20, 22) de l'étrier de frein (12) et/ou l'un des deux boulons de fixation du support de frein (10) est dans la direction radiale plus proche de l'axe rotation (R) du disque de frein que pour l'autre boulon de guidage (20, 22) ou l'autre boulon de fixation, et
- l'écart entre l'ouverture de logement (N, P) pour l'un des boulons de guidage (20, 22) et l'ouverture de logement (L, M) directement voisine de celui-ci pour un boulon de fixation est compris entre env. 10 % et env. 50 % de l'écart entre l'ouverture de logement (P, N) pour l'autre boulon de guidage (22, 20) et l'ouverture de logement (M, L) directement voisine de celui-ci pour un boulon de fixation.

2. Frein à disque de véhicule selon la revendication 1, dans le cadre duquel le frein de service est un frein de service hydraulique.

3. Frein à disque de véhicule selon la revendication 1 ou 2, dans le cadre duquel l'actionneur présente une chambre hydraulique dans laquelle est logé un piston de frein.

4. Frein à disque de véhicule selon l'une des revendications précédentes, dans le cadre duquel une électronique de commande et de puissance (34) est logée pour le moins partiellement dans le module (30) monté sur le frein à disque de véhicule pour alimenter le moteur électrique (32) en signaux de commande et/ou de puissance.

5. Frein à disque de véhicule selon l'une des revendications précédentes, présentant deux boulons de guidage (20, 22) pour l'étrier de frein (12) sur le support de frein (10) et deux boulons de fixation pour le support de frein (10) sur le châssis, les quatre boulons et leurs ouvertures de logement (L, M, N, P), vus dans la direction axiale, formant un rectangle asymétrique imaginaire.

6. Frein à disque de véhicule selon l'une des revendications précédentes, dans le cadre duquel un des deux boulons de guidage (20, 22) est disposé de manière à être positionné plus loin vers l'intérieur, en direction radiale, que l'autre.

7. Frein à disque de véhicule selon l'une des revendications précédentes, dans le cadre duquel le boulon de guidage disposé de manière à être positionné plus loin vers l'intérieur, dans la direction radiale, présente un diamètre plus faible que l'autre.

8. Frein à disque de véhicule selon l'une des revendications précédentes, dans le cadre duquel la dimension nécessaire pour que l'ouverture de logement (N, P) pour l'un des boulons de guidage (20, 22) soit positionnée dans la direction radiale plus proche de l'axe de rotation (R) du disque de frein que l'ouverture de logement pour l'autre boulon de guidage (22, 20) est comprise entre env. 150 % et env. 50 % de l'écart entre une ouverture de logement (P, N) pour l'autre boulon de guidage (22, 20) et l'ouverture de logement (L, M) directement voisine de celle-ci pour un boulon de fixation.

9. Frein à disque de véhicule selon l'une des revendications précédentes, dans le cadre duquel l'étrier de frein (12) présente une bride (12c) qui fait saillie radialement et dans laquelle est prévue une ouverture de passage pour le logement d'un boulon fileté (180).

10. Frein à disque de véhicule selon l'une des revendications précédentes, dans le cadre duquel le boulon de guidage (20) présente une zone de tête (140) dans laquelle est disposé un alésage fileté qui est orienté coaxialement par rapport à la tige du boulon de guidage (20) et par l'intermédiaire duquel l'étrier de frein (12) doit être fixé à l'aide dudit boulon fileté (180).

11. Frein à disque de véhicule conçu comme frein de service et comme frein de stationnement ou frein d'arrêt, présentant
- un support de frein (10) à fixer sur le châssis d'un véhicule automobile à l'aide d'au moins un boulon fileté et dans lequel support de frein (10) sont logés deux boulons de guidage (20, 22) pour
- guider en coulissement un étrier de frein (22) par rapport audit support de frein (10),
- un actionneur pour mettre en/hors contact de friction des garnitures de friction (24, 26) avec un disque de frein,
- un module (30) manipulable séparément et monté sur le frein à disque de véhicule, comprenant
-- un moteur électrique (32) pour actionner par le biais d'un convertisseur de rotation en translation ledit actionneur pour la mise en/hors contact de friction des garnitures de frein avec le disque de frein, **caractérisé en ce que**
- un des deux boulons de guidage (20, 22) et/ou un des deux boulons de fixation fait, dans la direction axiale, par rapport à l'autre boulon de guidage (22, 20), moins saillie de l'étrier de frein (12) dans la direction axiale et est conçu pour servir de palier de pivotement pour l'étrier de frein (12) avec module de frein de stationnement monté lorsqu'il manque l'autre boulon de guidage (22, 20).

12. Frein à disque de véhicule selon la revendication 11, dans le cadre duquel le frein de service est un frein de service hydraulique.

13. Frein à disque de véhicule selon la revendication 11 ou 12, dans le cadre duquel l'actionneur présente une chambre hydraulique dans laquelle est logé un piston de frein.

14. Frein à disque de véhicule selon l'une des revendications 11 à 13, dans le cadre duquel une électronique de commande et de puissance (34) est logée pour le moins partiellement dans le module (30) monté sur le frein à disque de véhicule pour alimenter le moteur électrique (32) en signaux de commande et/ou de puissance, et/ou la chambre hydraulique, dans laquelle le piston de frein est logé de manière étanche et peut être déplacé axialement dans le sens de la longueur, se trouve dans l'étrier de frein (12), et une unité d'alimentation en pression de freinage sert à alimenter la chambre hydraulique en fluide hydraulique, laquelle unité, une fois actionnée, met sous pression le fluide hydraulique contenu dans la chambre hydraulique, ce qui entraîne le déplacement axial du piston de frein pour mettre en contact de friction des garnitures de friction (24, 26) avec un disque de frein et, et/ou le module (30) présente une transmission(36) à laquelle est associé un convertisseur de rotation en translation, et/ou
le moteur électrique (32) est disposé de telle manière que son arbre secondaire s'étend à peu près parallèlement à l'axe de déplacement du piston de frein et sort du carter du moteur électrique (32) sur le côté opposé au piston de frein.
